# EUROPÄISCHE PATENTSCHRIFT

(11) **EP 2 982 026 B1**
(45) Veröffentlichungstag und Bekanntmachung des Hinweises auf die Patenterteilung: **20.03.2019**
(21) Anmeldenummer: 14715214.4
(22) Anmeldetag: 01.04.2014
(51) Int. Cl.: H02K 13/04, H01R 4/62, H01R 39/32, H01R 43/06

(54) **ROTOR EINER DYNAMOELEKTRISCHEN MASCHINE**
ROTOR OF A DYNAMOELECTRIC MACHINE
ROTOR D'UNE MACHINE DYNAMO-ÉLECTRIQUE

(30) Priorität: 04.04.2013 DE 102013005627
(43) Veröffentlichungstag der Anmeldung: 10.02.2016
(73) Patentinhaber: Sieva D.O.O. - Poslovna Enota Idrija, 5280 Idrija (SI)
(72) Erfinder: JESENKO, Silvo, 5275 Godovic (SI); PETRIC, Klemen, 5280 Idrija (SI); KUMAR, Ludvik, 1371 Logatec (SI)
(74) Vertreter: Grättinger Möhring von Poschinger Patentanwälte Partnerschaft
(86) Internationale Anmeldenummer: PCT/EP2014/000867
(87) Internationale Veröffentlichungsnummer: WO 2014/161654

(56) Entgegenhaltungen:
- WO-A1-88/06356
- DE-C- 964 257
- FR-A1- 2 225 854
- FR-A1- 2 458 930

## Beschreibung

Die vorliegende Erfindung betrifft einen Rotor einer dynamoelektrischen Maschine mit einer Welle, einem im Wesentlichen zylindrischen Anker, einer Ankerwicklung und einem Trommelkommutator, der einen isolierenden Trägerkörper und an diesem angebrachte, mittels Ankerabschnitten in dem Trägerkörper verankerte Leitersegmente, an welche die Wicklungsdrähte elektrisch leitend angeschlossen sind, umfasst. Die vorliegende Erfindung befasst sich auch mit Aspekten der Herstellung der bei solchen Rotoren eingesetzten Trommelkommutatoren.

Rotoren von dynamoelektrischen Maschinen, insbesondere von Elektromotoren, unterliegen in der Praxis einer Vielzahl von Anforderungen, die zum Teil in einem Konflikt zueinander stehen. Die wichtigsten derartigen Anforderungen an Rotoren der eingangs angegebenen Art bzw. die mit diesen ausgestatteten dynamoelektrischen Maschinen sind ein hoher Wirkungsgrad, eine hohe Leistung, eine kompakte Bauweise, Zuverlässigkeit und Langlebigkeit, geringer Wartungsaufwand, niedrige Herstellungskosten, niedriges Gewicht und geringe Massenträgheitsmomente. Diese Anforderungen gelten namentlich für elektrische Anlasser von Brennkraftmaschinen, wobei durch den verstärkten Einsatz von Start/Stopp-Funktionen der mit solchen Brennkraftmaschinen ausgerüsteten Fahrzeuge insbesondere hinsichtlich der Lebenserwartung des betreffenden Anlassers neue Herausforderungen entstanden sind. Dokument Dl offenbart einen Rotor mit einem Trommelkommutator.

Der vorliegenden Erfindung liegt die Aufgabe zugrunde, einen eingangs angegebenen Rotor bereitzustellen, der sich im Sinne eines besonders praxisgerechten Kompromisses hinsichtlich der vorstehend dargelegten praxisrelevanten Anforderungen durch eine besonders hohe Praxistauglichkeit auszeichnet, insbesondere auch im Hinblick auf seine Verwendung in Anlassern von Verbrennungsmotoren.

Gelöst wird diese Aufgabenstellung gemäß der vorliegenden Erfindung durch einen Rotor der eingangs angegebenen Art, der sich durch die nachstehenden, aufeinander abgestimmten, im Sinne eines synergetischen Zusammenwirkens funktional miteinander in Beziehung stehenden Merkmale auszeichnet:
- die Wicklungsdrähte bestehen aus Aluminium;
- die Leitersegmente weisen jeweils einen aus Kupfer bestehenden Laufflächenbereich und einen aus Aluminium oder einem mit Aluminium verschweißbaren Metall (aluminiumkompatibles Metall) bestehenden Anschlussbereich auf;
- die Ankerabschnitte bestehen vollständig aus Kupfer und sind jeweils Teil einer einheitlichen, auch den jeweils zugeordneten Laufflächenbereich umfassenden Kupferstruktur;
- der Anschlussbereich umfasst jeweils eine massive, gegenüber der Bürstenlauffläche radial überstehende Anschlussfahne;
- die Leitersegmente (10) sind aus einem strangartigen Zweistoff-Profil ausgestanzt, welches durch dauerhaftes Verbinden eines Kupfer-Teilprofils und eines Aluminium-Teilprofils entstanden ist.
- die Wicklungsdrähte sind endseitig ohne direkten Kontakt zu den Laufflächenbereichen mit der Anschlussfahne des jeweils zugeordneten Leitersegments verschweißt.

Zwar bleiben die maßgeblichen elektrischen Eigenschaften von Aluminium, d.h. insbesondere die Leitfähigkeit, signifikant hinter denen von Kupfer, welches in der Praxis bisher regelmäßig für die Wicklungsdrähte der Ankerwicklung von Rotoren dynamoelektrischer Maschinen eingesetzt wird, zurück. Infolge dessen bedarf es für vergleichbare Leistungen der Maschine, d.h. die Durchleitung übereinstimmender Ströme durch die Rotorwicklung etwa 25% dickerer Aluminium-Wicklungsdrähte, verglichen mit Wicklungsdrähten aus Kupfer, was zu einem um ca. 65% vergrößerten Volumen der Wicklung im Falle der Verwendung von Aluminium statt Kupfer führt. Unter Berücksichtigung der Dichte des jeweiligen Materials sowie der typischen Materialpreise ergibt sich allerdings im Falle der Verwendung von Aluminium für die Herstellung der Wicklungsdrähte ein ganz erheblicher Kostenvorteil gegenüber der Verwendung von Kupfer; und auch das Gewicht der Rotorwicklung lässt sich signifikant reduzieren (auf etwa 50% des Gewichts der Rotorwicklung aus Kupfer). Dies ist gerade bei Rotoren für Anlasser moderner Fahrzeuge ein ganz erheblicher Vorteil, weil das Trägheitsmoment des Rotors des Anlassers dementsprechend reduziert wird, was zu einer erhöhten Beschleunigung des Rotors beim Starten des Verbrennungsmotors führt. Demgemäß reduziert sich die Rotor-Drehzeit des Anlassers beim jeweiligen Anfahrzyklus, was hinwiederum positiven Einfluss auf den Bürstenverschleiß und auf den Kommutator-Verschleiß hat und die System-Lebenserwartung verlängert, die in Anwendung konventioneller Technik bei Fahrzeugen mit Start/Stopp-Funktion zu einem Problem geworden ist. Auf die System-Lebenserwartung bei gleichzeitig hoher Leistungsfähigkeit des Rotors wirkt sich zugleich auch die erfindungsgemäße Ausführung des Trommelkommutators aus. Denn der erfahrungsgemäß besonders sensible Bereich einer elektrisch gut leitfähigen und mechanisch dauerhaft festen Verbindung der Wicklungsdrähte mit den Leitersegmenten des Trommelkommutators kann infolge dessen, dass die Leitersegmente aus aluminiumkompatiblem Metall bestehende Anschlussbereiche mit jeweils einer massiven, gegenüber der Bürstenlauffläche radial überstehenden Anschlussfahne umfassen, in Anwendung von etablierten, besonders zuverlässigen Schweißverfahren durchgeführt werden. Umgekehrt leidet die Leistungsfähigkeit des Trommelkommutators nicht unter der Tendenz von Aluminium zur Bildung von nicht-leitenden Oxyden; denn die Leitersegmente des Trommelkommutators umfassen jeweils einen aus Kupfer bestehenden Laufflächenbereich. Die im Rahmen der vorliegenden Erfindung realisierte Verbindung von Kupfer (d.h. den aus Kupfer bestehenden Laufflächenbereichen der Leitersegmente bzw. die Laufflächenbereiche umfassenden Kupferstrukturen) mit Aluminium (d.h. den aus aluminiumkompatiblem Metall bestehenden, eine massive Anschlussplatte aufweisenden Anschlussbereichen der Leitersegmente bzw. die Anschlussbereiche umfassenden Aluminiumstrukturen) wird dabei bevorzugt innerhalb des Trommelkommutators realisiert, so dass die Verbindungsstelle für Elektrolyte, die eine Degradation der Verbindung aufgrund von Unterschieden in elektrischen Potenzialen verursachen könnten, nur eingeschränkt oder gar nicht zugänglich ist. In dem vorstehenden Sinn ist die Verbindung von Kupfer und Aluminium also bevorzugt vollständig in den Trägerkörper eingebettet. Die Dicke des aus Kupfer bestehenden Laufflächenbereichs beträgt dabei typischerweise mindestens 2 mm. Je nach der individuellen Bauweise (siehe unten) sind indessen auch erheblich darüber liegende Dicken mit Vorteil realisierbar.

Die Überlegung, die Rotorwicklung einer dynamoelektrischen Maschine aus Aluminium herzustellen, ist bereits in der US 3668449 A thematisiert worden. Allerdings lässt sich in Anwendung der Angaben aus diesem Dokument kein Rotor herstellen, der den oben dargelegten Anforderungen genügt. Denn der Kommutator wird, um eine aus Aluminium bestehende Rotorwicklung mit den Leitersegmenten verbinden zu können, aus einem aus Kupfer und Aluminium bestehenden Zweilagenblech hergestellt, das mit seiner Aluminiumschicht nach außen weisend zu einem Zylinder gewalzt wird. Der so entstandene Zylinder aus Zweilagenblech wird sodann auf einer Hülse montiert und durch Schnitte in einzelne Segmente unterteilt. Anschließend wird in dem für den späteren Kontakt mit Bürsten bestimmten Bereich des Zylinders aus Zweilagenblech die Aluminiumlage abgedreht. An den Anschlussfahnen verbleibt indessen das Blech zweilagig. Die Anschlussfahnen werden zu Ösen gebogen mit der Aluminiumlage innen und der Kupferlage, die für die Festigkeit der zur Öse gebogenen Anschlussfahne erforderlich ist, außen. Die Rotorwicklung wird durch die jeweilige Öse hindurchgeführt. Trotz des ganz erheblichen fertigungstechnischen Aufwandes ist im Ergebnis der Kommutator in keiner Weise tauglich für Anwendungen mit den gegenwärtig typischen hohen Leistungsanforderungen.

Zur sprachlichen Erleichterung wird im Folgenden in Bezug auf das Material der Leitersegmente teilweise von "Aluminium" (statt von "aluminiumkompatiblem Metall") gesprochen. Hierin besteht keine Einschränkung auf (reines) Aluminium; vielmehr ist in solchen Fällen "Aluminium" im Sinne von "aluminiumkompatibles Material" zu verstehen mit der Bedeutung, dass das Material mit aus Aluminium bestehenden Wicklungsdrähten einer Rotorwicklung verschweißbar ist.

Gemäß einer ersten bevorzugten Weiterbildung der vorliegenden Erfindung weisen die Anschlussbereiche der Leitersegmente des Trommelkommutators jeweils mindestens eine, das Ende mindestens eines Wicklungsdrahtes aufnehmende Aussparung, z.B. in Form einer Nut, Kerbe oder Durchbrechung auf, die sich bevorzugt parallel zur Kommutatorachse erstreckt. Dies ist - bei Anwendung hierzu geeigneter Schweißverfahren - vorteilhaft im Hinblick auf die Langlebigkeit des Rotors infolge einer dauerhaft besonders zuverlässigen Verbindung der Rotorwicklung mit dem Kommutator. Bei Anwendung anderer Schweißverfahren ist indessen günstig, wenn das Ende mindestens eines Wicklungsdrahts direkt mit der - keine Aussparung oder dergl. aufweisenden - radialen Außenfläche der Anschlussfahne verschweißt ist.

Eine andere bevorzugte Weiterbildung der Erfindung, die mit besonders einfach beherrschbaren Verfahrensschritten realisierbar ist, zeichnet sich dadurch aus, dass die Ankerabschnitte der Leitersegmente vollständig aus Kupfer bestehen und jeweils Teil einer einheitlichen, auch den jeweils zugeordneten Laufflächenbereich umfassenden Kupferstruktur sind. Dabei ist ein den jeweiligen Anschlussbereich des betreffenden Leitersegments umfassendes, aus aluminiumkompatiblem Material bestehendes Anschluss-Teilsegment besonders bevorzugt radial außen an die jeweils zugeordnete Kupferstruktur angesetzt. Hierbei kann jeweils das Anschluss-Teilsegment (radial oder axial) stumpf an die Kupferstruktur angeschweißt sein. Dies ist beispielsweise möglich bei Anwendung eines Schweißverfahrens nach dem Capacitor Discharge Welding Prozess (sog. Kondensatorentladungsschweißen). Der Vorteil dieses Verfahrens besteht in der nur minimalen Wärmeentwicklung, so dass der Wärmeeintrag in den aus Kupfer bestehenden Laufflächenbereich so gering ist, dass es dort nicht zu einer - die Härte und somit die Lebensdauer beeinträchtigenden - Rekristallisation des Kupfers kommt. In diesem Sinne zeichnet sich eine bevorzugte Weiterbildung der Erfindung dadurch aus, dass die Härte (Brinell) der Laufflächenbereiche der Leitersegmente des fertigen Trommelkommutators, insbesondere bei Anwendung eines Schweißverfahrens zur Verbindung der aus unterschiedlichem Material bestehenden Komponenten der Leitersegmente, mindestens 90 HB beträgt und vorteilhafterweise eine Toleranz von 5 HB einhält. Bei Anwendung anderer Verbindungstechniken (z.B. Kleben und Kaltschweißverfahren wie Ultraschallschweißen, Reibschweißen und dergleichen) greifen demgegenüber jeweils besonders bevorzugt, allerdings nicht zwingend das Anschluss-Teilsegment und die Kupferstruktur im Bereich einer verzahnten Verbindungszone ineinander.

Auch können bei im Rahmen der vorliegenden Erfindung einsetzbaren Kommutatoren, bei denen die Ankerabschnitte der Leitersegmente vollständig aus Kupfer bestehen und Teil einer einheitlichen Kupferstruktur sind, die Leitersegmente aus einem strangartigen Zweistoff-Profil ausgestanzt werden, welches durch dauerhaftes Verbinden eines Kupfer-Teilprofils (Strangprofils) und eines Aluminium-Teilprofils (Strangprofils) entstanden ist. Das Kupfer-Teilprofil und das Aluminium-Teilprofil werden dabei bevorzugt kontinuierlich unter hohem Druck (zwischen mindestens zwei Rollen) zusammengewalzt, wobei zum einen das Kupfer-Teilprofil vor seiner Verbindung mit dem Aluminium-Teilprofil vorgewärmt wird (insbesondere mittels induktiver Erwärmung) und zum anderen ein Laserstrahl unmittelbar in die Verbindungszone zwischen den beiden Teilprofilen hinein gerichtet ist. Auf diese Weise ergibt sich mit vergleichsweise geringem fertigungstechnischem Aufwand eine mechanisch und elektrisch besonders belastbare Verbindung zwischen dem Aluminium-Teilprofil und dem Kupfer-Teilprofil. Das Aluminium-Teilprofil wird bevorzugt anschließend im Bereich der späteren Laufflächenbereiche abgestanzt so weit, so dass dort das Kupfer-Teilprofil freiliegt. So kommt diese Weiterbildung mit einem kontinuierlich arbeitenden Verbindungsverfahren aus, um die Kupferkomponente und die Aluminiumkomponente miteinander zu verbinden, und zwar bevorzugt bevor die Leitersegmente aus dem betreffenden Zweistoff-Strangprofil ausgestanzt werden.

Gemäß einer anderen bevorzugten Weiterbildung der Erfindung bestehen die Ankerabschnitte nur teilweise aus Kupfer, indem jeweils ein erster Bereich des Ankerabschnitts Teil einer einheitlichen, auch den jeweils zugeordneten Laufflächenbereich umfassenden Kupferstruktur und ein zweiter Bereich des Ankerabschnitts Teil eines einheitlichen, auch den jeweils zugeordneten Anschlussbereich umfassenden Anschluss-Teilsegments aus aluminiumkompatiblem Metall ist. Hier sind somit die die Anschlussbereiche umfassenden Anschluss-Teilsegmente selbständig - über die zugeordneten Ankerabschnittsbereiche - in dem Trägerkörper verankert, was dazu beitragen kann, die Verbindungsstelle zwischen Kupfer und Aluminium mechanisch zu entlasten. Besonders bevorzugt können dabei die Kupferstruktur und das Anschluss-Teilsegment im Bereich einer axialen Stirnseite der Kupferstruktur stumpf miteinander verschweißt sein. Auch hier werden wiederum in Sinne der vorstehenden Erläuterungen bevorzugt solche Schweißverfahren eingesetzt, die eine vergleichsweise geringe Wärmeentwicklung zur Folge haben, wie insbesondere das Capacitor Discharge Welding (Kondensatorentladungsschweißen). Statt einer stumpfen Verschweißung der Kupferstruktur und des Anschluss-Teilsegments im Bereich einer axialen Stirnseite der Kupferstruktur können, namentlich wenn insbesondere eine Reib- oder Ultraschallschweißung vorgesehen ist, im Bereich der Verbindung von Kupferstruktur und Anschluss-Teilsegment Formschluss-Eingriffszonen insbesondere mit parallel zur Kommutatorachse orientierten Vorsprüngen und korrespondierenden Einschnitten vorgesehen sein. Dies wirkt sich sowohl im Hinblick auf die Statik positiv aus, als auch im Hinblick auf die elektrische Leistungsfähigkeit unter Langzeitbedingungen; denn durch besagte Formschluss-Eingriffszonen lässt sich die stromdurchflossene Kontaktfläche am Übergang von den Anschluss-Teilsegmenten zu den Kupferstrukturen signifikant erhöhen.

Gemäß einer abermals anderen bevorzugten Weiterbildung der Erfindung bestehen die Ankerabschnitte vollständig aus aluminiumkompatiblem Metall. Sie können dabei insbesondere jeweils vollständig Teil einer einheitlichen, auch den jeweils zugeordneten Anschlussbereich umfassenden Grundstruktur aus aluminiumkompatiblem Metall sein, auf die eine den Laufflächenabschnitt umfassende Kupferauflage aufgebracht ist. Für die Verbindung der Kupferauflage mit der Grundstruktur aus aluminiumkompatiblem Metall gelten die weiter oben erläuterten Aspekte, sowohl hinsichtlich der Formgebung des Übergangsbereichs (stumpf bzw. profiliert) als auch hinsichtlich möglicher Verbindungsverfahren (Kleben, Schweißen und dergleichen). Im Hinblick auf verschiedene der eingangs dargelegten Gesichtspunkte (Gewicht, Materialkosten) ist diese Weiterbildung, nachdem hier zur Herstellung der Leitersegmente im größtmöglichen Maß Aluminium (bzw. aluminiumkompatibles Metall) zum Einsatz kommt, besonders günstig.

Auch können bei im Rahmen der vorliegenden Erfindung einsetzbaren Kommutatoren, bei denen die Ankerabschnitte der Leitersegmente - im Sinne der vorstehenden Erläuterung - vollständig aus aluminiumkompatiblem Material bestehen, Leitersegmentrohlinge aus einem strangartigen Zweistoff-Profil ausgestanzt werden, welches durch dauerhaftes Verbinden eines Kupfer-Teilprofils (Strangprofils) und eines Aluminium-Teilprofils (Strangprofils) entstanden ist. Das Kupfer-Teilprofil und das Aluminium-Teilprofil werden dabei bevorzugt - entsprechend der Verfahrensweise nach der EP 805733 B1 bzw. der EP 2090395 A2 - kontinuierlich unter hohem Druck (zwischen mindestens zwei Rollen) zusammengewalzt, wobei zum einen das Kupfer-Teilprofil vor seiner Verbindung mit dem Aluminium-Teilprofil vorgewärmt wird (insbesondere mittels induktiver Erwärmung) und zum anderen ein Laserstrahl unmittelbar in die Verbindungszone zwischen den beiden Teilprofilen hinein gerichtet ist. Auf diese Weise ergibt sich mit vergleichsweise geringem fertigungstechnischem Aufwand eine mechanisch und elektrisch besonders belastbare Verbindung zwischen dem Aluminium-Teilprofil und dem Kupfer-Teilprofil. Beim - oder ggf. in einem zweiten Schritt nach dem - Ausstanzen der Leitersegmentrohlinge aus dem strangartigen Zweistoff-Profil wird bevorzugt dort, wo später eine separate, den Anschlussbereich umfassende Aluminiumstruktur angebracht werden soll, das Kupfer-Teilprofil so weit abgestanzt, so dass dort das Aluminium-Teilprofil freiliegt. Auf dem freiliegenden Aluminium-Teilprofil des Leitersegmentrohlings wird sodann eine separate, den Anschlussbereich umfassende Aluminiumstruktur angeschweißt, beispielsweise mittels einer Laserschweißung.

Gemäß einer abermals anderen, verfahrenstechnisch besonders attraktiven Weiterbildung sind die Leitersegmente jeweils aus zwei vorgefertigten Teilsegmenten zusammengefügt, indem an ein den Laufflächenabschnitt und einen ersten Teilankerabschnitt umfassendes erstes Teilsegment stirnseitig ein den Anschlussbereich und einen zweiten Teilankerabschnitt umfassendes zweites Teilsegment angeschweißt ist. Das jeweils erste Teilsegment umfasst dabei besonders bevorzugt im Bereich einer verzahnten Verbindungszone ineinandergreifend eine aus aluminiumkompatiblem Metall bestehende Basis und eine den Laufflächenabschnitt umfassende Kupferauflage. Bei dieser Weiterbildung ist die Herstellung des jeweiligen Trommelkommutators mit geringstmöglichem Abfall durchführbar.

Eine andere, besonders attraktive Möglichkeit der Herstellung der Leitersegmente des im Rahmen der Erfindung eingesetzten Trommelkommutators besteht darin, dass diese jeweils ein Zweistoff-Extrusionsprofil mit einer typischerweise zur Kommutatorachse parallelen Übergangszone zwischen Kupfer und aluminiumkompatiblem Metall beinhalten. Bei dieser Weiterbildung werden demgemäß nicht vorgefertigte Formteile zusammengefügt, um das jeweilige Leitersegment zu erzeugen. Vielmehr wird bei der Herstellung der Leitersegmente ein Zweistoff-Extrusionsprofil verarbeitet. Eine erste in dieser Hinsicht ganz besonders bevorzugte Weiterbildung zeichnet sich dadurch aus, dass es sich bei dem Zweistoff-Extrusionsprofil um ein Koextrusionsprofil handelt, welches durch gleichzeitiges Extrudieren von Kupfer und aluminiumkompatiblem Metall durch eine gemeinsame formgebende Düse hindurch erzeugt wird. Dies ist in Anwendung des sogenannten "Conform"-Verfahrens unter Einsatz der hierauf ausgelegten Maschinen möglich. Gemäß einer anderen besonders bevorzugten Weiterbildung wird zur Herstellung des Zweistoff-Extrusionsprofils aluminiumkompatibles Metall an ein vorgefertigtes Kupfer-Grundprofil anextrudiert. Hierfür eignen sich insbesondere auf die Anwendung des sogenannten "Conklad"-Verfahrens ausgerichtete Maschinen. Die Übergangszone zwischen dem aluminiumkompatiblem Metall und dem Kupfer-Grundprofil kann dabei nach dem Extrudieren des aluminiumkompatiblen Metalls einer mechanischen Nachbearbeitung unterzogen werden, um die Qualität der Verbindung zu optimieren. Hier sind insbesondere Pressverfahren zu nennen, die mit einem gewissen Walken des Materials einhergehen.

Bei sämtlichen vorstehend dargelegten, der Herstellung von Zweistoff-Extrusionsprofilen dienenden Extrusionsverfahren kann, gemäß einer abermals weitergehenden bevorzugten Weiterbildung der Erfindung, das jeweilige Zweistoff-Extrusionsprofil durch Halbierung eines symmetrischen Dreizonen-Extrusionsprofils hergestellt werden. So kann beispielsweise das Dreizonen-Extrusionsprofil, welches durch Anwendung des Conform-Verfahrens oder aber des Conklad-Verfahrens hergestellt wurde, einen zentralen Bereich aus Kupfer und zwei äußere Bereiche aus aluminiumkompatiblem Metall umfassen, wobei der KupferBereich später durchtrennt wird, um zwei Zweistoff-Extrusionsprofile zu erhalten. Aufgrund der in diesem Falle symmetrischen Verhältnisse beim Extrudieren ist in diesem Falle eine Einhaltung besonders hohen Qualitätsstandards bei guter Reproduzierbarkeit realisierbar.

Im Folgenden wird die vorliegende Erfindung anhand mehrerer in der Zeichnung veranschaulichter bevorzugter Ausführungsbeispiele näher erläutert. Dabei zeigt
- Fig. 1: in einem für das Verständnis der vorliegenden Erfindung maßgeblichen Ausschnitt einen mit einem erfindungsgemäßen Rotor ausgestatten Anlasser,
- Fig. 2: in perspektivischer Ansicht eine erste Ausführungsform der Lamellen (Leitersegmente) des bei dem Rotor nach Fig. 1 eingesetzten Trommelkommutators,
- Fig. 2a: eine Abwandlung der in Fig. 2 dargestellten Lamelle,
- Fig. 3: in perspektivischer Ansicht eine zweite Ausführungsform der Lamellen des bei dem Rotor nach Fig. 1 eingesetzten Trommelkommutators,
- Fig. 4: in perspektivischer Ansicht eine dritte Ausführungsform der Lamellen des bei dem Rotor nach Fig. 1 eingesetzten Trommelkommutators,
- Fig. 4a: eine Abwandlung der in Fig. 4 dargestellten Lamelle,
- Fig. 5: in perspektivischer Ansicht eine vierte Ausführungsform der Lamellen des bei dem Rotor nach Fig. 1 eingesetzten Trommelkommutators,
- Fig. 5a: eine Abwandlung der in Fig. 5 dargestellten Lamelle und
- Fig. 6: in perspektivischer Ansicht eine fünfte Ausführungsform der Lamellen des bei dem Rotor nach Fig. 1 eingesetzten Trommelkommutators. Weiterhin veranschaulicht
- Fig. 7: die Herstellung eines zur Weiterverarbeitung als Trommelkommutator-Lamelle bestimmten Grundprofils in Form eines Zweistoff-Extrusionsprofils in Anwendung des Conform-Verfahrens,
- Fig. 8: einen Vertikalschnitt durch die nach Fig. 7 eingesetzte Extrusionsdüse,
- Fig. 9: einen Horizontalschnitt durch die nach Fig. 7 eingesetzte Extrusionsdüse,
- Fig. 10: einen Querschnitt durch ein in Anwendung des in Fig. 7 veranschaulichten Conform-Verfahrens hergestelltes Lamellen-Grundprofil,
- Fig. 11: die in Anwendung des Conklad-Verfahrens erfolgende Herstellung eines als Zweistoff-Dreizonen-Extrusionsprofil ausgeführten Grundprofils, das nach seiner Halbierung zur Weiterverarbeitung als Trommelkommutator-Lamelle bestimmt ist,
- Fig. 12: das bei dem Verfahren nach Fig. 11 zum Einsatz kommende Kupfer-Basisprofil im Schnitt,
- Fig. 13: im Querschnitt das in Anwendung des Verfahrens nach Fig. 12 hergestellte Zweistoff-Dreizonen-Extrusionsprofil und
- Fig. 14: einen Querschnitt durch das mittels Halbierung des Zweistoff-Dreizonen-Extrusionsprofils nach Fig. 13 hergestellte Lamellen-Grundprofil und
- Fig. 15: eine andere Verfahrensvariante zur Herstellung eines strangartigen Zweistoff-Profils, aus welchem Leitersegmente bzw. Leitersegmentrohlinge ausgestanzt werden können.

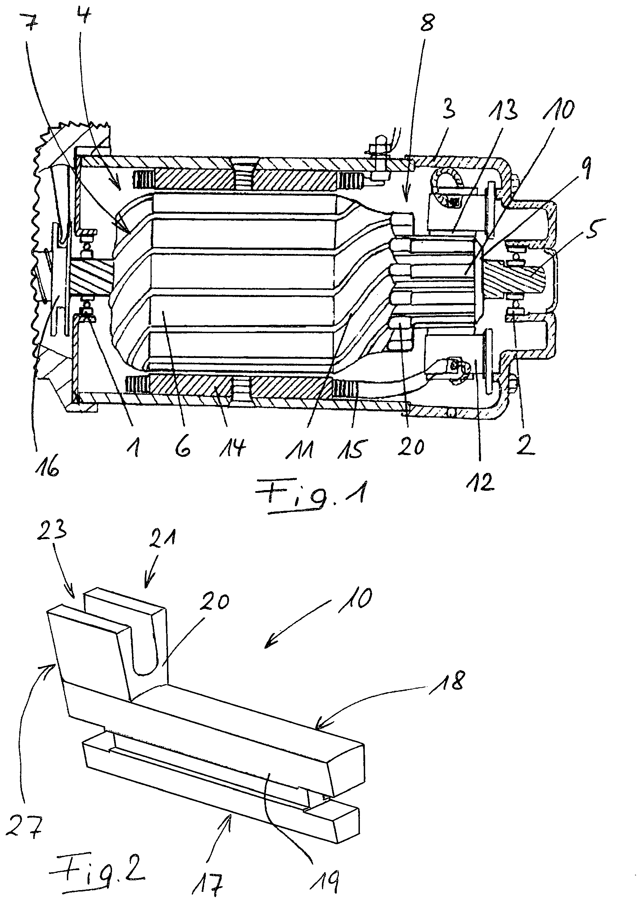

Gemäß Fig. 1 umfasst der mittels zweier Lager 1, 2 in einem Anlassergehäuse 3 gelagerte Rotor 4 eine Welle 5, einen im Wesentlichen zylindrischen Anker 6, eine Ankerwicklung 7 und einen Trommelkommutator 8. Der Trommelkommutator 8 weist einen isolierenden Trägerkörper 9 und an diesem angebrachte, mittels Ankerabschnitten in dem Trägerkörper verankerte Leitersegmente 10 auf. An diese sind die Wicklungsdrähte 11 der Ankerwicklung 7 elektrisch leitend angeschlossen. Erkennbar sind in Fig. 1 darüber hinaus weitere, vorliegend allerdings nicht maßgebliche Komponenten des Anlassers wie insbesondere die Bürstenträger 12 mit Bürsten 13, die Polschuhe 14 mit der Statorwicklung 15 und die Schiebemuffe 16 zum Einrücken des Anlasserritzels in die Verzahnung der Schwungscheibe des betreffenden Verbrennungsmotors.

In dem vorliegend dargelegten Umfang entspricht der in Fig. 1 veranschaulichte Anlasser dem üblichen, hinlänglich bekannten Stand der Technik, so dass es für das Verständnis weiterer Erläuterungen nicht bedarf.

In Umsetzung der vorliegenden Erfindung bestehen die Wicklungsdrähte 11 des Rotors 4 aus Aluminium. Die Leitersegmente 10 des Trommelkommutators 8 sind in Mehrstoffbauweise ausgeführt. Sie weisen jeweils einen aus Kupfer bestehenden Laufflächenbereich 18 und einen aus Aluminium bestehenden Anschlussbereich 21 auf, wobei der aus Aluminium bestehende Anschlussbereich 21 jeweils eine massive, gegenüber der Bürstenlauffläche radial überstehende Anschlussfahne 20 umfasst. Die Wicklungsdrähte 11 sind endseitig ohne direkten Kontakt zu den (aus Kupfer bestehenden) Laufflächenbereichen 18 mit der Anschlussfahne 20 des jeweils zugeordneten Leitersegments 10 verschweißt.

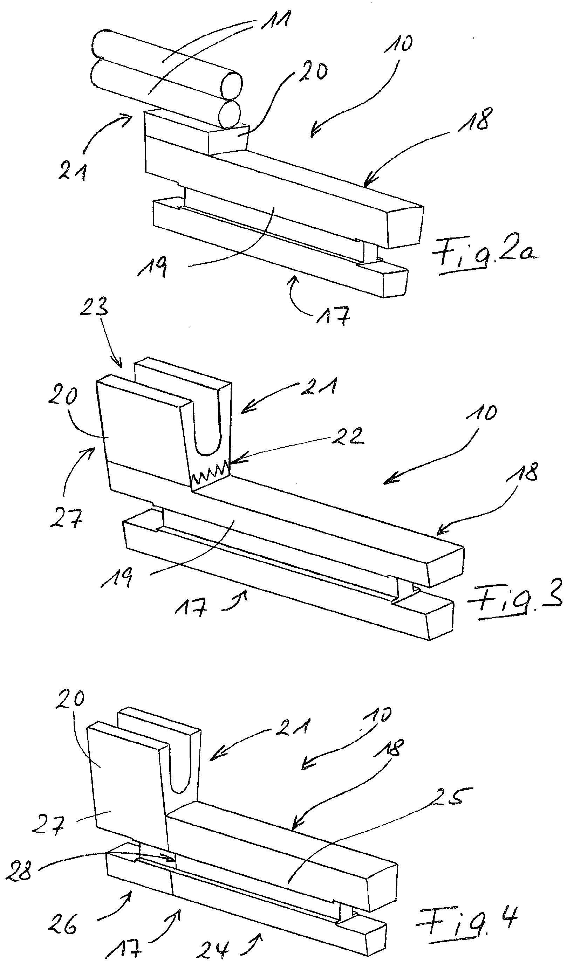

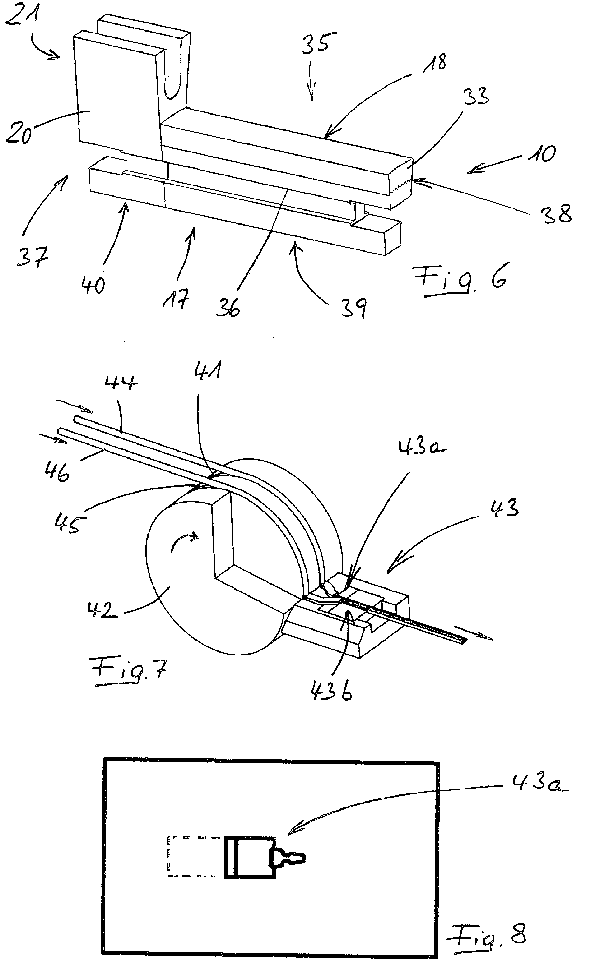

Bei den in den Fig. 2 und 3 gezeigten Ausführungsbeispielen bestehen die (hinterschnittenen) Ankerabschnitte 17 der Leitersegmente 10 des Trommelkommutators jeweils vollständig aus Kupfer. Sie sind jeweils Teil einer einheitlichen, auch den jeweils zugeordneten Laufflächenbereich 18 umfassenden Kupferstruktur 19. Jeweils ist ein die massive Anschlussfahne 20 des betreffenden Leitersegments umfassendes, aus Aluminium bestehendes Anschluss-Teilsegment 27 radial außen an die jeweils zugeordnete Kupferstruktur 19 angesetzt. Nach Fig. 2 ist das Anschluss-Teilsegment 27 dabei stumpf an die Kupferstruktur 19 angeschweißt, und zwar unter Anwendung einer Kondensatorentladungsschweißung. Demgegenüber greifen bei dem Ausführungsbeispiel nach Fig. 3, bei dem das Anschluss-Teilsegment 27 und die Kupferstruktur 19 z.B. über eine Ultraschallschweißung miteinander verbunden sind, das Anschluss-Teilsegment 27 und die Kupferstruktur 19 im Bereich einer verzahnten Verbindungszone 22 ineinander. Auf zwei andere Verfahren, welche sich für die Herstellung eines strangartigen Grundprofils eignen, aus welchem Leitersegmente 10 im Wesentlichen nach Fig. 2 und 3 durch Ausstanzen hergestellt werden können, wird weiter unten - im Zusammenhang mit den Figuren 7 bis 15 - detailliert eingegangen. Bei beiden Ausführungsbeispielen gemäß den Fig. 2 und 3 weist die massive Anschlussfahne jeweils eine die Enden zweier Wicklungsdrähte 11 aufnehmende nutförmige Aussparung 23 auf. Dies ist allerdings keinesfalls unabdingbar, da, wie Fig. 2a veranschaulicht, die beiden Enden der Wicklungsdrähte 11 auch ohne eine solche Aussparung mit der massiven Anschlussfahne 20 verscheißt werden können.

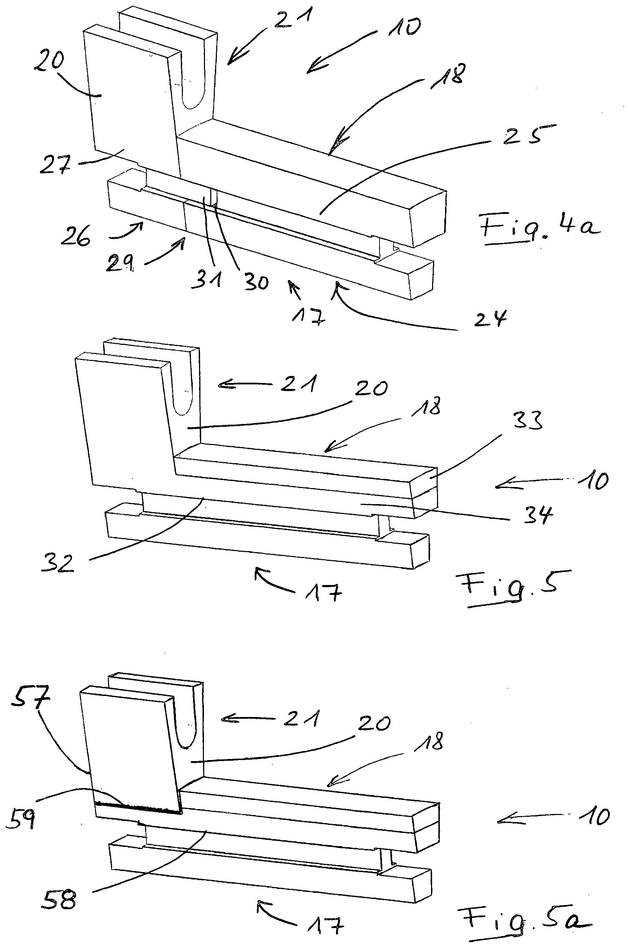

Bei dem Ausführungsbeispiel nach Fig. 4 besteht, anders als bei den vorstehend erläuterten Ausführungsbeispielen, der Ankerabschnitt 17 der Lamelle 10 nur teilweise aus Kupfer, im Übrigen indessen aus Aluminium. So ist bei dieser Lamelle ein erster Bereich 24 des Ankerabschnitts 17 Teil einer einheitlichen, auch den jeweils zugeordneten Laufflächenbereich 18 umfassenden Kupferstruktur 25 und ein zweiter Bereich 26 des Ankerabschnitts 17 Teil eines einheitlichen, auch den jeweils zugeordneten Anschlussbereich 21 mit der massiven Anschlussfahne 20 umfassenden Anschluss-Teilsegments 27 aus Aluminium. Die Kupferstruktur 25 und das Anschluss-Teilsegment 27 sind dabei im Bereich einer axialen Stirnseite 28 der Kupferstruktur 25 stumpf miteinander verschweißt, und zwar unter Anwendung einer Kondensatorentladungsschweißung. Bei der abgewandelten Ausführungsform nach Fig. 4a ist demgegenüber im Bereich des Übergangs vom Anschluss-Teilsegment 27 zur Kupferstruktur 25 eine Formschluss-Eingriffszone 29 vorgesehen. Diese umfasst einen an dem Anschluss-Teilsegment 27 vorgesehenen, in eine korrespondierende Aussparung 30 der Kupferstruktur 25 eingreifenden Vorsprung 31, wodurch die Kontaktfläche zwischen Anschluss-Teilsegment 27 und Kupferstruktur 25 entsprechend vergrößert wird und die Kontaktfläche im Übrigen auch Anteile mit einer Orientierung in Umfangsrichtung erhält. Diese Ausgestaltung eignet sich speziell für ein Kaltverschweißen von Anschluss-Teilsegment 27 und Kupferstruktur 25 mittels Ultraschallschweißung oder Reibschweißung. In weiterer Abwandlung wäre bei solchen Verbindungstechniken beispielsweise auch eine verzahnte Verbindungszone analog zu derjenigen nach Fig. 3 denkbar.

Bei den Ausführungsbeispielen nach den Fig. 5, 5a und 6 bestehen, anders als nach den vorstehend erläuterten Ausführungsformen, die Ankerabschnitte 17 vollständig aus Aluminium. So ist bei der Lamelle 10 nach Fig. 5 der Ankerabschnitt 17 vollständig Teil einer einheitlichen, auch den jeweils zugeordneten Anschlussbereich 21 mit der massiven Anschlussfahne 20 umfassenden Grundstruktur 32 aus Aluminium. Auf die Grundstruktur 32 aus Aluminium ist eine den Laufflächenabschnitt 18 umfassende Kupferauflage 33 aufgebracht, zu welchem Zweck die Grundstruktur 32 aus Aluminium einen Tragsteg 34 aufweist. Zur Verbindung der Kupferauflage 33 mit der Grundstruktur 32 aus Aluminium, d.h. deren Tragsteg 34 eignen sich z.B. als solches bekannte Kaltschweißverfahren, Kondensatorentladungsschweißverfahren sowie Klebverfahren unter Verwendung elektrisch leitfähiger Klebstoffe.

Fig. 5a veranschaulicht eine Abwandlung der Ausführungsform nach Fig. 5. Und zwar ist hier der Anschlussbereich 21 mit der massiven Anschlussfahne 20 nicht Teil einer einheitlichen, auch den Ankerabschnitt umfassenden Grundstruktur. Vielmehr ist zur Bildung des Anschlussbereiches 21 eine separate, die Anschlussfahne 20 umfassende Aluminiumstruktur 57 - beispielsweise mittels einer Laserschweißung - an einen Leitersegmentrohling 58 angeschweißt. Der Leitersegmentrohling 58 ist hinwiederum aus einem strangartigen Zweistoff-Profil ausgestanzt worden, welches durch dauerhaftes Verbinden eines Kupfer-Teilprofils (Strangprofils) und eines Aluminium-Teilprofils (Strangprofils) entstanden ist (vgl. die nachstehende Erläuterung zu den Figuren 7 bis 15), wobei beim - oder ggf. in einem zweiten Schritt nach dem - Ausstanzen des Leitersegmentrohlings 58 aus dem strangartigen Zweistoff-Profil dort, wo später die separate, die Anschlussfahne 20 umfassende Aluminiumstruktur 57 angebracht wird, das Kupfer-Teilprofil so weit abgestanzt wird, dass dort das Aluminium-Teilprofil freiliegt, so dass die die massive Anschlussfahne 20 umfassende Aluminiumstruktur 57 dort an dem Leitersegmentrohling 58 angeschweißt werden kann (vgl. die Al-Al Schweißverbindung 59).

Bei dem in Fig. 6 gezeigten Leitersegment 10 ist demgegenüber ein vorgefertigtes erstes Teilsegment 35, welches eine aus Aluminium bestehende Basis 36 und eine darauf aufgebrachte, den Laufflächenabschnitt 18 umfassende Kupferauflage 33 umfasst, stirnseitig mit einem vorgefertigten zweiten Teilsegment 37 zusammengefügt, welches aus Aluminium besteht und den Anschlussbereich 21 mit der massiven Anschlussfahne 20 umfasst. Die Kupferauflage 33 und die Basis 36 des ersten Teilsegments 35 greifen dabei im Bereich einer verzahnten Verbindungszone 38 ineinander. Auf ein für die Herstellung des ersten Teilsegments 35 besonders geeignetes Verfahren wird weiter unten detailliert eingegangen. Beide Teilsegmente 35 und 37 des Leitersegments sind unabhängig voneinander im Trägerkörper 9 des Trommelkommutators 8 verankert, indem das erste Teilsegment 35 einen ersten Teilankerabschnitt 39 und das zweite Teilsegment 37 einen zweiten Teilankerabschnitt 40 umfasst. Die Verbindung der beiden Teilsegmente 35 und 37 erfolgt dabei wiederum, zum Schutz des aus Kupfer bestehenden Laufflächenabschnitts 18 vor Rekristallisation, in Anwendung eines Kondensatorentladungsschweißverfahrens.

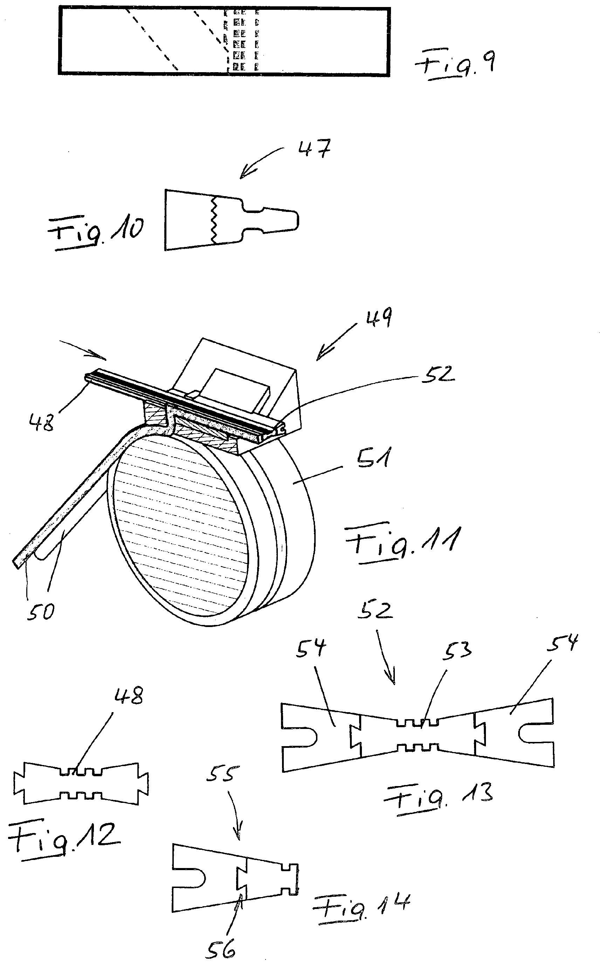

Bereichsweise aus zwei fest miteinander verbundenen Materialien, d.h. vorliegend einerseits aus Kupfer und andererseits aus aluminiumkompatiblem Metall bestehende Strukturen der Leitersegmente 10, wie dies insbesondere für das Leitersegment 10 nach Fig. 3 und das erste Teilsegment 35 des Leitersegments 10 nach Fig. 6 gilt, lassen sich bei geeigneter Orientierung der Übergangszone (d.h. im Wesentlichen parallel zur Kommutatorachse) in bevorzugter Weiterbildung der vorliegenden Erfindung als ein Zweistoff-Extrusionsprofil herstellen, wie dies - in zwei verschiedenen Verfahrensvarianten - in den Fig. 7 bis 14 veranschaulicht ist. Nach Fig. 7 lässt sich hierzu insbesondere - und zwar unter Einsatz von "Multi-Grove"-Maschinen - das sog. "Conform"-Verfahren anwenden, welches nachstehend unter Bezugnahme auf die Herstellung eines Grundprofils, welches zur Weiterverarbeitung zu dem in Fig. 3 gezeigten Leitersegment 10 geeignet ist, erläutert wird. Über eine erste Umfangsnut 41 des Zuführrades 42 wird der Extrusionsdüse 43 Kupfer in Form eines Kupferstranges 44 zugeführt, über eine zweite Umfangsnut 45 Aluminium in Form eines Aluminiumstranges 46. Die Extrusionsdüse 43 ist, insbesondere durch entsprechende Ausführung der Extrusionskanäle für die beiden Materialien, dabei so gestaltet, dass die Formgebung von Kupfer und Aluminium räumlich geringfügig gestaffelt erfolgt. So erhält das Kupfer seine in dem fertigen Zweistoff-Extrusionsprofil (vgl. Fig. 10) vorliegende Querschnittsform (einschließlich der gezahnten Verbindungsoberfläche) in einem ersten Düsenabschnitt 43a. An das extrudierte Kupfer wird in einem zweiten, nachgeschalteten Düsenabschnitt 43b das Aluminium durch Extrusion angeformt. Das bereits in der Verfestigung begriffene Kupfer begrenzt somit den von dem Aluminium durchströmten Extrusionskanal, was zu einer intensiven, innigen, dauerhaft haltbaren, stoffschlüssigen Verbindung von Aluminium und Kupfer miteinander führt. In Anwendung des Verfahrens nach Fig. 7 wird das Zweistoff-Extrusionsprofil (Fig. 10), welches ein Lamellen-Grundprofil 47 für die Weiterverarbeitung zu der Lamelle 10 nach Fig. 3 darstellt, durch gleichzeitige Extrusion von Kupfer und Aluminium durch ein gemeinsames Düsensystem hindurch als ein Koextrusionsprofil hergestellt.

In entsprechender Weise wie das Zweistoff-Extrusionsprofil nach Fig. 10 lassen sich anders gestaltete Kupfer/Aluminium Zweistoff-Extrusionsprofile für Leitersegmente von bei erfindungsgemäßen Rotoren verwendeten Trommelkommutatoren herstellen, wie insbesondere ein Grundprofil, welches sich zu dem ersten Teilprofil 35 des Leitersegments 10 nach Fig. 6 weiterverarbeiten lässt.

Fig. 11 veranschaulicht die Anwendung des "Conklad"-Verfahrens zur Herstellung eines anderen Kupfer/Aluminium Zweistoff-Extrusionsprofils 55 (vgl. Fig. 14), das (als Lamellen-Grundprofil) im Rahmen der Herstellung eines Trommelkommutator-Leitersegments eines erfindungsgemäßen Rotors verwendet werden kann. Und zwar wird hier Aluminium an ein vorgeformtes Kupfer-Basisprofil 48 (vgl. Fig. 12), welches ohne nennenswerte Formänderung durch die Extrusionsdüse 49 hindurchgeführt wird, anextrudiert. Durch Zuführung von zwei Aluminiumsträngen 50 mittels eines Zweinuten-Zuführrades 51 und entsprechende Ausführung der Extrusionsdüse 49 erfolgt ein symmetrisches, doppeltes Anextrudieren von Aluminium an das Kupfer-Basisprofil 48, wodurch ein symmetrisches Dreizonen-Extrusionsprofil 52 (vgl. Fig. 13) mit einer Kupfer-Kernzone 53 und zwei Aluminium-Randzonen 54 entsteht. Durch Halbierung gehen aus dem Dreizonen-Extrusionsprofil 52 zwei Zweistoff-Extrusionsprofile 55 (Fig. 14) hervor. Bei Anwendung des Conklad-Verfahrens ist zweckmäßig, wenn durch einen schwalbenschwanzförmigen Hinterschnitt 56 der Kupferbereich und der Aluminiumbereich jeweils zusätzlich formschlüssig miteinander verbunden sind. Zudem kann dem Anextrudieren des Aluminiums an das Kupfer-Basisprofil 48 eine mechanische Nachbearbeitung der Übergangszonen folgen, um die mechanische und elektrische Qualität der Übergangszonen zu optimieren.

Nur der Vollständigkeit halber ist darauf hinzuweisen, dass auch in Anwendung des Conform-Verfahrens (Fig. 7) zunächst ein symmetrisches Zweistoff-Dreizonen-Extrusionsprofil hergestellt werden kann, das anschließend in zwei übereinstimmende Zweistoff-Lamellen-Grundprofile halbiert wird. In diesem Fall kommt eine Conform-Maschine mit einem Dreinuten-Zuführrad zur Anwendung, wobei der gemeinsamen Extrusionsdüse über die mittige Zuführnut des Zuführrades ein Strang aus dem ersten Material und über die beiden seitlichen Zuführnuten zwei Stränge aus dem zweiten Material zugeführt werden.

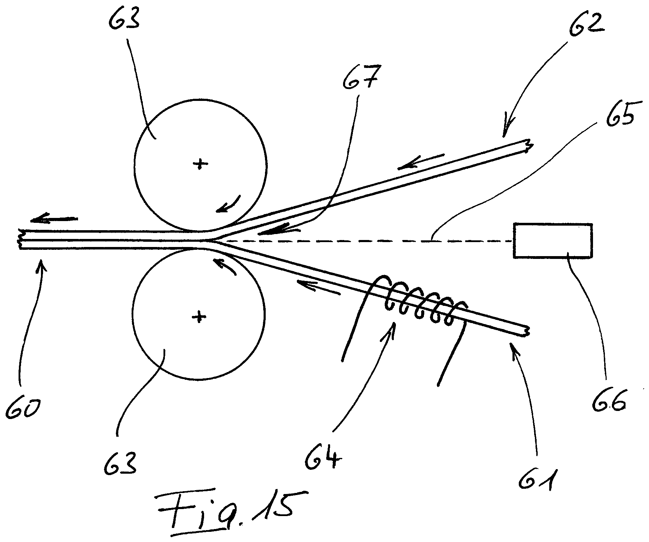

Fig. 15 veranschaulicht eine Alternative, wie ein strangartiges Zweistoff-Profil 60 hergestellt werden kann, welches geeignet ist, um daraus Leitersegmente 10 beispielsweise entsprechend den Figuren 2 und 3 oder aber Leitersegmentrohlinge 58, wie sie zur Herstellung von Leitersegmenten nach Fig. 5a verwendet werden können, auszustanzen. Und zwar werden ein Kupfer-Teilprofil 61 und ein Aluminium-Teilprofil 62 kontinuierlich unter hohem Druck (zwischen zwei sich drehenden Rollen 63) zusammengewalzt, wobei zum einen das Kupfer-Teilprofil 61 vor seiner Verbindung mit dem Aluminium-Teilprofil 62 mittels induktiver Erwärmung (vgl. die Induktionsheizung 64) vorgewärmt wird und zum anderen ein Laserstrahl 65 (vgl. die Lasereinheit 66) unmittelbar in die Verbindungszone 67 zwischen den beiden Teilprofilen hinein gerichtet ist. Bei dem auf diese Weise hergestellten Zweistoff-Profil 60 ist die Verbindung zwischen dem Aluminium-Teilprofil 62 und dem Kupfer-Teilprofil 61 mechanisch und elektrisch ausreichend belastbar.

## Patentansprüche

1. Rotor (4) einer dynamoelektrischen Maschine mit einer Welle (5), einem im Wesentlichen zylindrischen Anker (6), einer Ankerwicklung (7) und einem Trommelkommutator (8), der einen isolierenden Trägerkörper (9) und an diesem angebrachte, mittels Ankerabschnitten (17) in dem Trägerkörper (9) verankerte Leitersegmente (10), an welche die Wicklungsdrähte (11) elektrisch leitend angeschlossen sind, umfasst, mit den folgenden Merkmalen:
- die Wicklungsdrähte (11) bestehen aus Aluminium;
- die Leitersegmente (10) weisen jeweils einen aus Kupfer bestehenden Laufflächenbereich (18) und einen aus Aluminium oder aus einem mit Aluminium verschweißbaren Metall (aluminiumkompatibles Metall) bestehenden Anschlussbereich (21) auf;
- die Ankerabschnitte (17) bestehen vollständig aus Kupfer und sind jeweils Teil einer einheitlichen, einer dem jeweils zugeordneten Laufflächenbereich (18) umfassenden Kupferstruktur (19);
- der Anschlussbereich (21) umfasst jeweils eine massive, gegenüber der Bürstenlauffläche radial überstehende Anschlussfahne (20);
- die Leitersegmente (10) sind aus einem strangartigen Zweistoff-Profil (60) ausgestanzt, welches durch dauerhaftes Verbinden eines Kupfer-Teilprofils (61) und eines Aluminium-Teilprofils (62) entstanden ist;
- die Wicklungsdrähte (11) sind endseitig ohne direkten Kontakt zu den Laufflächenbereichen (18) mit der Anschlussfahne (20) des jeweils zugeordneten Leitersegments (10) verschweißt.

2. Rotor nach Anspruch 1, **dadurch gekennzeichnet, dass** Leitersegmente (10) mit einer im Wesentlichen zur Kommutatorachse parallelen Übergangszone von Kupfer auf aluminiumkompatibles Metall jeweils ein Zweistoff-Extrusionsprofil beinhalten.

3. Rotor nach Anspruch 2, **dadurch gekennzeichnet, dass** es sich bei dem Zweistoff-Extrusionsprofil um ein Koextrusionsprofil handelt hergestellt durch gleichzeitiges Extrudieren von Kupfer und aluminiumkompatiblem Metall durch eine gemeinsame Düse (43) hindurch.

4. Rotor nach Anspruch 2, **dadurch gekennzeichnet, dass** das Zweistoff-Extrusionsprofil hergestellt ist durch Anextrudieren von aluminiumkompatiblem Metall an ein Kupfer-Grundprofil (48).

5. Rotor nach Anspruch 4, **dadurch gekennzeichnet, dass** nach dem Anextrudieren von aluminiumkompatiblem Metall an das Kupfer-Grundprofil (48) eine mechanische Nachbearbeitung der Übergangszone erfolgt ist.

6. Rotor nach einem der Ansprüche 1 bis 5, **dadurch gekennzeichnet, dass** das Zweistoff-Extrusionsprofil durch Halbierung aus einem symmetrischen Dreizonen-Extrusionsprofil (52) hervorgegangen ist.

7. Rotor nach einem der Ansprüche 1 bis 6, **dadurch gekennzeichnet, dass** die Anschlussfahnen (20) jeweils eine das Ende mindestens eines Wicklungsdrahtes (11) aufnehmende Aussparung aufweisen.

8. Rotor nach einem der Ansprüche 1 bis 6, **dadurch gekennzeichnet, dass** das Ende mindestens eines Wicklungsdrahts (11) direkt mit der - keine Aussparung oder dergl. aufweisenden - radialen Außenfläche der betreffenden Anschlussfahne (20) verschweißt ist.

## Claims

1. A rotor (4) of a dynamoelectric machine with a shaft (5), a substantially cylindrical armature (6), an armature winding (7) and a drum commutator (8), which comprises an insulating support member (9) and conductor segments (10), which are attached thereto and anchored in the support member (9) by means of armature portions (17), and to which the winding wires (11) are attached in electrically conducting relationship, with the following features:
- the winding wires (11) consist of aluminum;
- the conductor segments (10) respectively have a running-surface region (18) consisting of copper and a terminal region (21) consisting of aluminum or a metal that can be welded to aluminum (aluminum-compatible metal);
- the armature portions (17) consist completely of copper and are respectively part of a uniform copper structure (19) that also comprises the respective associated running-surface region (18);
- the terminal region (21) comprises respectively a massive terminal lug (20), which projects radially relative to the brush running surface;
- the conductor segments (10) are stamped out of a strand-like two-component profile (60), which was formed by durably joining a copper sub-profile (61) and an aluminum sub-profile (62) ;
- the winding wires (11) are welded at the end to the terminal lug (20) of the respectively associated conductor segment (10), without being in direct contact with the running-surface regions (18).

2. A rotor according to claim 1, **characterized in that** conductor segments (10) with a transition zone from copper to aluminum-compatible metal substantially parallel to the commutator axis respectively contain a two-component extrusion profile.

3. A rotor according to claim 2, **characterized in that** the two-component extrusion profile is a coextrusion profile, which is produced by simultaneous extrusion of copper and aluminum-compatible metal through a common nozzle (43).

4. A rotor according to claim 2, **characterized in that** the two-component extrusion profile is produced by extruding aluminum-compatible metal onto a copper basic profile (48).

5. A rotor according to claim 4, **characterized in that**, after extrusion of aluminum-compatible metal onto the copper basic profile (48), mechanical post-processing of the transition zone is carried out.

6. A rotor according to one of claims 1 to 5, **characterized in that** the two-component extrusion profile is produced from a symmetric three-zone extrusion profile (52) by halving.

7. A rotor according to one of claims 1 to 6, **characterized in that** the terminal lugs (20) respectively have a recess for receiving the end of at least one winding wire (11).

8. A rotor according to one of claims 1 to 6, **characterized in that** the end of at least one winding wire (11) is welded directly to the radial outer face - which is not provided with any recess or the like - of the terminal lug (20) in question.

## Revendications

1. Rotor (4) d'une machine dynamo-électrique avec un arbre (5), un induit pour l'essentiel cylindrique (6), un enroulement d'induit (7) et un commutateur à tambour (8), qui comprend un corps de support isolant (9) et des segments conducteurs (10) ancrés dans le corps de support (9) montés sur celui-ci au moyen de sections d'induit (17), auxquels sont raccordés les fils d'enroulement (11) de façon électro-conductrice, avec les caractéristiques suivantes :
- les fils d'enroulement (11) sont en aluminium,
- les segments conducteurs (10) comportent respectivement une zone de surface utile en cuivre (18) et une zone de connexion (21) en aluminium ou dans un métal soudable avec l'aluminium (métal compatible avec l'aluminium),
- les sections d'induit (17) sont complètement en cuivre et font respectivement partie d'une structure de cuivre (19) uniforme, comprenant la zone de surface utile (18) respectivement attribuée,
- la zone de connexion (21) comprend respectivement un talon de connexion (20) massif, dépassant radialement en face de la surface utile de balai,
- les segments conducteurs (10) sont découpés à partir d'un profilé à deux constituants de type cordon (60), lequel est réalisé par raccordement permanent d'une partie de profilé en cuivre (61) et d'une partie de profilé en aluminium (62),
- les fils d'enroulement (11) sont soudés sans contact direct avec les zones de surface utile (18) au talon de connexion (20) du segment conducteur respectivement attribué (10).

2. Rotor selon la revendication 1, **caractérisé en ce que** les segments conducteurs (10) avec une zone de transition de cuivre sur un métal compatible avec l'aluminium parallèle pour l'essentiel à l'axe de commutateur contiennent respectivement un profilé d'extrusion à deux constituants.

3. Rotor selon la revendication 2, **caractérisé en ce que** concernant le profilé d'extrusion à deux constituants, il s'agit d'un profilé de coextrusion fabriqué par extrusion simultanée de cuivre et de métal compatible avec l'aluminium à travers une buse commune (43).

4. Rotor selon la revendication 2, **caractérisé en ce que** le profilé d'extrusion à deux constituants est fabriqué par coextrusion d'un métal compatible avec l'aluminium sur un profilé de base en cuivre (48).

5. Rotor selon la revendication 4, **caractérisé en ce qu'**après la coextrusion du métal compatible avec l'aluminium une finition mécanique de la zone de transition a lieu sur le profilé de base en cuivre (48).

6. Rotor selon l'une quelconque des revendications 1 à 5, **caractérisé en ce que** le profilé d'extrusion à deux constituants est obtenu en divisant par deux un profilé d'extrusion symétrique à trois zones (52).

7. Rotor selon l'une quelconque des revendications 1 à 6, **caractérisé en ce que** les talons de connexion (20) comportent respectivement un évidement logeant l'extrémité d'au moins un fil d'enroulement (11).

8. Rotor selon l'une quelconque des revendications 1 à 6, **caractérisé en ce que** l'extrémité d'au moins un fil d'enroulement (11) est directement soudée à la surface extérieure radiale du talon de connexion concerné (20) (ne comportant aucun évidement ou élément semblable).
